# EUROPÄISCHE PATENTSCHRIFT

(11) **EP 2 914 779 B1**
(45) Veröffentlichungstag und Bekanntmachung des Hinweises auf die Patenterteilung: **17.05.2017**
(21) Anmeldenummer: 13814416.7
(22) Anmeldetag: 01.11.2013
(51) Int. Cl.: E02B 3/02, E04D 13/08, B01D 29/11, E03B 3/03

(54) **WASSERFILTER, INSBESONDERE REGENWASSERFILTER**
WATER FILTER, IN PARTICULAR RAINWATER FILTER
FILTRE À EAU, NOTAMMENT FILTRE À EAU DE PLUIE

(30) Priorität: 02.11.2012 DE 102012021367
(43) Veröffentlichungstag der Anmeldung: 09.09.2015
(73) Patentinhaber: WISY AG Haustechniksysteme, Filtertechnik, 63699 Kefenrod (DE)
(72) Erfinder: DENK, Arnold, 63688 Gedern (DE); MAURER, Jan, 63699 Kefenrod (DE)
(74) Vertreter: Hebing, Norbert
(86) Internationale Anmeldenummer: PCT/DE2013/000647
(87) Internationale Veröffentlichungsnummer: WO 2014/067510

(56) Entgegenhaltungen:
- EP-A1- 1 130 176
- DE-A1- 3 812 136
- DE-A1- 19 714 739
- DE-A1- 19 847 655
- DE-A1-102008 039 497

## Beschreibung

Die Erfindung bezieht sich auf einen Wasserfilter, insbesondere auf einen Regenwasserfilter in einer Zisterne, mit einem Gehäuse, in dem ein Sieb angeordnet ist, das das Gehäuse in eine Schmutzwasserkammer und in eine Reinwasserkammer teilt, wobei die Schmutzwasserkammer über einen Zulauf für zu filterndes Wasser und einen Schmutzwasserablauf für das ungefilterte Wasser und die Reinwasserkammer über einen Reinwasserablauf für das gefilterte Wasser verfügt, mit einem Zisternenüberlauf, der über einen Siphon in den Schmutzwasserablauf einmündet und den weiteren Merkmalen des Oberbegriffs des Anspruches 1.

Ein derartiger wasserfilter ist in der DE 198 47 655 A1 beschrieben . Dieses Dokument wird als nächstliegender Stand der Technik angesehen. Es zeigt ein Filtersystem, bestehend aus einem doppelwandigen Zylinder, in dessen Innenraum ein Einsatz mit einem Filtersieb 3 einsetzbar ist, wobei der Einsatz, sobald er in das Gehäuse eingesetzt wird, Verbindungen zu einem Zu- und einem Ablaufrohr erhält. Die Rohre verlaufen horizontal durch die Ringkammer zwischen den beiden Wänden des Zylinders. Innerhalb der Ringkammer befindet sich eine Trennwand mit einem Siphon, der eine Außenöffnung in der Innenwand aufweist. Das Ablaufrohr für Schmutzwasser besitzt eine Überlauföffnung, über die das über die Außenöffnung in die Ringkammer eindringende Wasser ablaufen kann.

Die DE 197 14 739 A1 zeigt eine Zisterne, in deren oberen Bereich ein Wasserfilter angeordnet ist. Das Gehäuse des Wasserfilters wird durch ein schräg angeordnetes Sieb in eine obere Schmutzwasserkammer und in eine darunter liegende Reinwasserkammer geteilt. Das zu filternde Wasser wird über einen Zulauf in die Schmutzwasserkammer geleitet. Dort wird es gefiltert, wobei das gefilterte Wasser über einen Reinwasserablauf aus der Reinwasserkammer abgeleitet wird. Das nicht gefilterte Wasser läuft über einen mit der Schmutzwasserkammer verbundenen Schmutzwasserablauf zurück in den Kanal.

Um ein Überlaufen der Zisterne zu vermeiden, ist gemäß der DE 197 14 739 A1 ein Überlauf vorgesehen, der außerhalb des Gehäuses des Regenwasserfilters über einen aus einem Rohrkrümmer bestehenden Siphon an den Schmutzwasserablauf anschließt. Ein derartiger Siphon ist notwendig, um einen Geruchsverschluss zwischen der Zisterne und dem Kanal zu schaffen. Außerdem wird auf diese Weise verhindert, dass z. B. Ratten aus dem Kanal in die Zisterne gelangen können.

Gemäß der DE 10 2008 039 497 A1 besitzt der Schmutzwasserablauf eine Überlaufkante, über die Wasser, das bei einer gefüllten Zisterne nicht in den Reinwasserablauf abfließen konnte, in den Schmutzwasserablauf gelangt. Die Überlaufkante wird durch den Rand einer Öffnung in der Oberseite eines horizontal geführten Rohres gebildet, das den Schmutzwasserablauf bildet.

Gemäß der DE 38 12 136 A1 ragt das untere Ende eines tubusförmigen Filters unter Bildung eines Spaltes in ein senkrecht verlaufendes Rohr hinein, das den Schmutzwasserablauf bildet. Der obere Rand des Rohres bildet eine Überlaufkante. Ein Kragen am Filter befindet sich oberhalb dieses Spaltes, ohne diesen dabei zu verschließen, so dass über dem oberen Rand des Rohres gefiltertes Wasser, das nicht in den Reinwasserablauf gelangen konnte, weil die Zisterne gefüllt ist, dort in den Schmutzwasserablauf überfließen kann.

Der Wasserfilter gemäß der EP 1 130 176 A1 besitzt ebenfalls einen horizontalen Schmutzwasserablauf. Dieser schließt aber dicht an einen tubusförmigen Filter an, so dass kein Überlauf gebildet wird.

Die Erfindung geht von dem Problem aus, dieses System baulich zu vereinfachen.

Zur Lösung des Problems schlägt die Erfindung vor, dass im unteren Teil des Gehäuses des wasserfilters eine Siphonkammer ausgebildet ist, die über eine Überlaufkante mit dem Schmutzwasserablauf in Verbindung steht und eine Außenöffnung aufweist, und dass zur Bildung des Siphons in der Siphonkammer mittels einer Trennwand ein Bereich zwischen der überlaufkante und der Außenöffnung abgetrennt ist, wobei die Unterkante der Trennwand unterhalb der Außenöffnung und unterhalb des Überlaufs liegt.

Durch die bauliche Integration des Siphons in das Gehäuse des Wasserfilters wird der Bauaufwand wesentlich geringer. Auch die Montage des Wasserfilters in der Zisterne wird vereinfacht, da kein gesonderter Überlauf mit einem Siphon montiert werden muss.

Der bauliche Aufwand wird dann noch weiter vereinfacht, wenn ein Schmutzwasserablaufrohr, das den Schmutzwasserablauf bildet, durch die Siphonkammer verläuft und innerhalb der Siphonkammer eine die Überlaufkante bildende Öffnung aufweist. Das überschüssige Zisternenwasser gelangt damit durch die Außenöffnung und den Siphon in die Siphonkammer und fließt von dort über die Überlaufkante in den Schmutzwasserablauf und von dort weiter in den Kanal.

Gemäß dieser Ausbildung ist somit nicht nur ein Rohrkrümmer vorgesehen, der von einer Ratte ggf. durchtaucht werden kann, sondern eine mit Wasser gefüllte Kammer, die wegen ihrer Größe wesentlich schwerer für eine Ratte zu überwinden ist.

Zur Ausbildung einer Siphonkammer wird vorgeschlagen, dass das Gehäuse ein Oberteil in Form eines an der Unterseite von einem Boden verschlossenen Zylinders hat, wobei der Boden einen Durchlass aufweist, an den das Schmutzwasserablaufrohr anschließt, und dass das Gehäuse ein die Siphonkammer enthaltenes Unterteil in Form eines Topfes aufweist, der mit seiner offenen Seite an den Boden anschließt, dass das Schmutzwasserablaufrohr in einem Bogen durch die Siphonkammer verläuft, der zu einem Abschnitt der Seitenwand des Unterteils führt und diesen durchdringt.

Dadurch liegt die die Überlaufkante bildende Öffnung an der Oberseite eines horizontal verlaufenden Abschnitts des bogenförmigen Schmutzwasserablaufrohrs. Auf diese Weise wird eine Platz sparende Anordnung des Schmutzwasserablaufrohres und des Siphons im Unterteil erhalten.

Vorzugsweise ist die Trennwand an dem gegenüberliegenden Abschnitt der Seitenwand angeordnet.

Der Zusammenbau des Oberteils und des Unterteils zu einem Gehäuse lässt sich vereinfachen, wenn das Unterteil und das Schmutzwasserablaufrohr eine integrale Einheit bilden, die mit dem Oberteil lösbar verbunden ist. Dies erleichtert auch die Reparatur und Reinigung des Wasserfilters.

Als lösbare Verbindung kann z. B. eine Rastverbindung vorgesehen sein.

Der Siphon könnte auch z. B. als ein Rohrkrümmer in der Siphonkammer ausgebildet werden. Am Einfachsten lässt er sich aber realisieren, wenn die Trennwand einen vertikal verlaufenden Abschnitt, der die Außenöffnung überspannt, und einen horizontal verlaufenden Abschnitt aufweist, der den Bereich zwischen dem vertikal verlaufenden Abschnitt und der Seitenwand des Unterteils nach oben hin verschließt.

Das Gehäuse des Wasserfilters wird in der Regel aus einem Kunststoff im Spritzgussverfahren gefertigt. Da der Siphon einen Hinterschnitt bildet, ist es schwierig, dies mit einer Spritzgussmaschine zu realisieren. Daher schlägt die Erfindung vor, dass der vertikal verlaufende Abschnitt und der horizontal verlaufende Abschnitt eine integrale Einheit bilden, die in das Unterteil eingesetzt und mit diesem verschweißt oder verklebt ist.

Im Folgenden soll anhand eines Ausführungsbeispieles die Erfindung näher erläutert werden. Dazu zeigen:
- Fig. 1: einen Querschnitt durch das Gehäuse eines Wasserfilters und
- Fig. 2: eine perspektivische Ansicht eines Unterteils eines Wasserfiltergehäuses (Draufsicht von schräg oben).

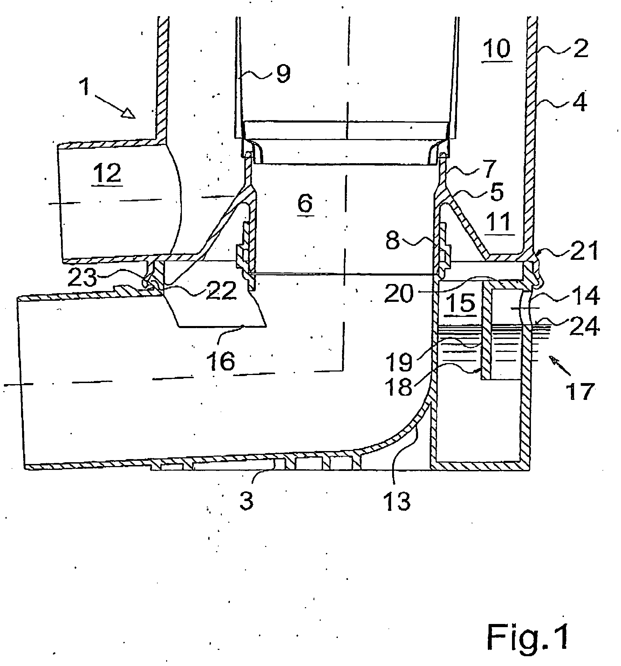

Im Folgenden wird zunächst auf die Fig. 1 Bezug genommen. Diese zeigt im Querschnitt das Gehäuse 1 eines Wasserfilters. Dieser besteht aus einem Oberteil 2 und einem Unterteil 3. Das Oberteil 2, dessen unterer Abschnitt dargestellt ist, besteht aus einem Zylinder 4, dessen Unterseite von einem Boden 5 verschlossen ist. An einer zentralen Stelle des Bodens 5 befindet sich ein Durchlass 6 mit einem nach oben weisenden oberen Anschlussstutzen 7 und einem nach unten weisenden unteren Anschlussstutzen 8. Auf den oberen Anschlussstutzen 7 ist ein zylinderförmiges Adhäsionssieb 9 aufgesetzt, so dass zwischen dem Zylinder 4 und dem Sieb 9 ein Ringraum 10 besteht.

Um einen Schmutzwassereinlauf zu verwirklichen, befindet sich auf dem Oberteil noch ein - hier nicht dargestellter - Deckel mit einem zentralen Einlauf, der in das Adhäsionssieb 9 hineinragt, so dass das durch den Einlauf einströmende Schmutzwasser an der Innenseite des Adhäsionssiebes 9 hinunterläuft und dabei auf Grund von Adhäsionskräften zum größten Teil durch das Adhäsionssieb 9 nach außen gesogen wird. Der Schmutz bleibt an der Innenseite zurück und wird vom Restwasser mitgenommen.

Der Boden 5 ist zu dem oberen Anschlussstutzen 7 hin leicht nach oben gezogen, so dass eine Ringwanne 11 gebildet ist, von der seitlich ein Reinwasserablauf 12 abzweigt. Das obere Ende des Siebes 9 ist, was hier nicht näher dargestellt ist, mit einem Zulauf verbunden, in den das zu filternde Regenwasser einläuft. Das Regenwasser läuft an der Innenseite des Siebes 9 nach unten und wird dabei durch Adhäsionskräfte in den Ringraum 10 gesogen und gelangt von dort gefiltert in die Ringwanne 11 und weiter über den Reinwasserablauf 12 in eine hier nicht dargestellte Zisterne, in der der Regenwasserfilter angeordnet ist. Das nicht gefilterte Regenwasser läuft durch den zentralen Durchlass 6 in ein gekrümmt verlaufendes Schmutzwasserablaufrohr 13, das auf den unteren Anschlussstutzen 8 aufgesteckt ist.

Das Schmutzwasserablaufrohr 13 ist ein integraler Bestandteil des topfförmigen Unterteils 3, dessen Boden z. T. von der Wandung des Schmutzwasserablaufrohres 13 gebildet wird. Das Schmutzwasserablaufrohr 13 läuft durch die Seitenwand des Unterteils 3. Gegenüberliegend zu dem Bereich der Seitenwand, der von dem Schmutzwasserablaufrohr 13 durchdrungen ist, befindet sich eine Außenöffnung 14 in Form von ein oder mehreren Löchern innerhalb der Seitenwand des Unterteils. Durch diese Außenöffnung 14 gelangt Wasser aus der Zisterne in eine Siphonkammer 15, die den Schmutzwasserablauf ringförmig umgibt.

Das Schmutzwasserablaufrohr 13 ist innerhalb der Siphonkammer 15 an seiner horizontal verlaufenden Oberseite offen, so dass eine Überlaufkante 16 gebildet ist. Wasser, das aus der Zisterne in die Siphonkammer 15 gelangt, fließt über die Überlaufkante 16 in das Schmutzwasserablaufrohr 13 und von dort weiter zum Kanal.

Zur Ausbildung eines Siphons 17 innerhalb der Siphonkammer 15 wird wie folgt vorgegangen: Über die Außenöffnung 14 erstreckt sich eine Trennwand 18, bestehend aus einem vertikalen Abschnitt 19 und einem horizontalen Abschnitt 20.

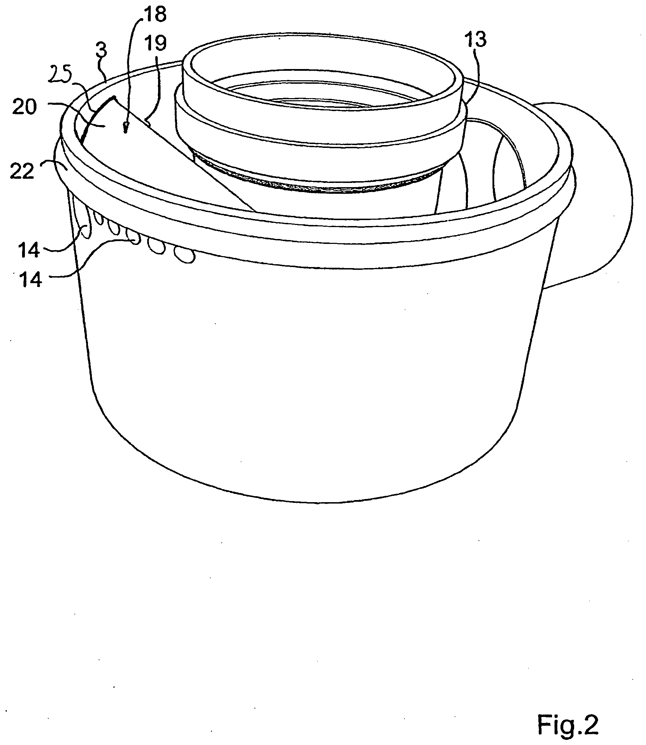

Wie in der Fig. 2 zu erkennen ist, handelt es sich bei dem vertikalen Abschnitt 19 um eine gerade verlaufende Wand, die entlang einer Sekante, bezogen auf die Seitenwand des Unterteils, verläuft. Der dadurch entstehende kalottenförmige Bereich zwischen der Seitenwand und dem vertikalen Abschnitt wird durch den horizontalen Abschnitt 20 verschlossen. Die Unterseite des Bereichs bleibt offen, wobei die untere Kante der Trennwand 18 unterhalb der Außenöffnung 14 und auch unterhalb der Überlaufkante 16 liegt. Dies hat zur Folge, dass sich stets Wasser in der Siphonkammer befindet, das auch den Bereich zwischen der Trennwand 18 und der Seitenwand des Unterteils 3 ausfüllt und dort einen Geruchsverschluss bildet.

Wie man der Fig. 2 entnehmen kann, ist die Trennwand 18 gesondert hergestellt worden und mit dem Unterteil 3 verschweißt oder verklebt (Schweißnaht 25).

Das Unterteil mit dem Schmutzwasserablaufrohr 13 bildet eine Einheit, die mit dem Boden 5 des Oberteils 2 mittels einer Rastverbindung 21 verbunden ist. Dazu besitzt die Seitenwand des Unterteils 3 an ihrer Oberkante eine umlaufende Lippe 22, die in eine umlaufende, nach innen gerichtete Nut 23 am Oberteil 2 eingreift.

Die Seitenwand des Unterteils ist mit mehreren Löchern versehen, die die Außenöffnung 14 bilden.

Die Fig. 1 zeigt den Wasserspiegel 24 bei einer gefüllten Zisterne. Der Spiegel 24 befindet sich auf Höhe der Überlaufkante 16. Steigt das Wasser weiter, würde überschüssiges Wasser über die Überlaufkante 16 in das Schmutzwasserablaufrohr 13 fließen. Bei einem fallenden Wasserspiegel 24 verbleibt aber Wasser innerhalb der Siphonkammer 15, die einen Geruchsverschluss der Außenöffnung 14 bildet.

### Bezugszeichenliste

- 1: Gehäuse
- 2: Oberteil
- 3: Unterteil
- 4: Zylinder
- 5: Boden

- 6: Durchlass
- 7: oberer Anschlussstutzen
- 8: unterer Anschlussstutzen
- 9: Sieb
- 10: Ringraum

- 11: Ringwanne
- 12: Reinwasserablauf
- 13: Schmutzwasserablaufrohr
- 14: Außenöffnung
- 15: Siphonkammer

- 16: Überlaufkante
- 17: Siphon
- 18: Trennwand
- 19: vertikaler Abschnitt
- 20: horizontaler Abschnitt
- 21: Rastverbindung
- 22: Lippe
- 23: Nut
- 24: Wasserspiegel
- 25: Schweißnaht

## Patentansprüche

1. Wasserfilter, insbesondere ein Regenwasserfilter für eine Zisterne, mit einem Gehäuse (1), in dem ein Sieb (9) angeordnet ist, das das Gehäuse (1) in eine Schmutzwasserkammer und in eine Reinwasserkammer teilt, wobei die Schmutzwasserkammer über einen Zulauf für zu filterndes Wasser und einen Schmutzwasserablauf für das ungefilterte Wasser und die Reinwasserkammer über einen Reinwasserablauf (12) für das gefilterte Wasser verfügt, mit einem Zisternenüberlauf, der über einen Siphon (17) in den Schmutzwasserablauf einmündet, wobei im unteren Teil des Gehäuses (1) des Wasserfilters eine Siphonkammer (15) ausgebildet ist, die über eine Überlaufkante (16) mit dem Schmutzwasserablauf in Verbindung steht und eine Außenöffnung (14) aufweist, und dass zur Bildung des Siphons (17) in der Siphonkammer (15) mittels einer Trennwand (18) ein Bereich zwischen der Überlaufkante (16) und der Außenöffnung (14) abgetrennt ist, wobei die Unterkante der Trennwand (18) unterhalb der Außenöffnung (14) und unterhalb der Überlaufkante (16) liegt, und wobei ein Schmutzwasserablaufrohr (13), das den Schmutzwasserablauf bildet, durch die Siphonkammer (15) verläuft und innerhalb der Siphonkammer (15) eine die Überlaufkante (16) bildende Öffnung aufweist, die an der Oberseite eines horizontal verlaufenden Abschnitts des Schmutzwasserablaufrohres (13) liegt, **dadurch gekennzeichnet, dass** das Gehäuse (1) ein Oberteil (2) in Form eines an der Unterseite von einem Boden (5) verschlossenen Zylinders hat, wobei der Boden (5) einen Durchlass (6) aufweist, an den das Schmutzwasserablaufrohr (13) anschließt, und dass das Gehäuse ein die Siphonkammer (15) enthaltenes Unterteil (3) in Form eines Topfes aufweist, der mit seiner offenen Seite an den Boden (5) anschließt, und dass das Schmutzwasserablaufrohr (13) in einem Bogen durch die Siphonkammer verläuft, der zu einem Abschnitt der Seitenwand des Unterteils (3) führt und diesen durchdringt.

2. Wasserfilter nach Anspruch 1, **dadurch gekennzeichnet, dass** die Trennwand (18) an einem zur Überlaufkante gegenüberliegenden Abschnitt der Seitenwand angeordnet ist.

3. Wasserfilter nach Anspruch 1 oder 2, **dadurch gekennzeichnet, dass** das Unterteil (3) und das Schmutzwasserablaufrohr (13) eine integrale Einheit bilden, die mit dem Oberteil (2) lösbar verbunden ist.

4. Wasserfilter nach Anspruch 3, **dadurch gekennzeichnet, dass** die lösbare Verbindung eine Rastverbindung ist.

5. Wasserfilter nach Anspruch 1 oder 2, **dadurch gekennzeichnet, dass** die Trennwand (18) einen vertikal verlaufenden Abschnitt (19), der die Außenöffnung (14) überspannt, und einen horizontal verlaufenden Abschnitt (20) aufweist, der den Bereich zwischen dem vertikal verlaufenden Abschnitt (19) und der Seitenwand des Unterteils (3) nach oben hin verschließt.

6. Wasserfilter nach Anspruch 5, **dadurch gekennzeichnet, dass** der vertikal verlaufende Abschnitt (19) und der horizontal verlaufende Abschnitt (20) eine integrale Einheit bilden, die in das Unterteil (3) eingesetzt und mit diesem verschweißt oder verklebt ist.

## Claims

1. A water filter, in particular a rain water filter for a cistern, with a housing (1) in which a sieve (9) is arranged which divides the housing (1) into a dirty water chamber and a clean water chamber, wherein the dirty water chamber has an inlet for the unfiltered water and the clean water chamber has a rain water outlet (12) for the filtered water, with a cistern overflow which runs via a siphon (17) into the dirty water outlet, wherein in the lower part of the housing (1) of the water filter a siphon chamber (15) is formed which connects with the dirty water outlet via an overflow edge (16) and which has an outer opening (14), and that for forming the siphon (17) in the siphon chamber (15), a region between the overflow edge (16) and the outer opening (14) is separated by means of a partition wall (18), wherein the lower edge of the partition wall (18) is situated below the outer opening (14) and below the overflow edge (16), and wherein a dirty water outlet pipe (13), which forms the dirty water outlet, runs through the siphon chamber (15) and has an opening forming the overflow edge (16) inside the siphon chamber (15) which is situated on the upper side of a horizontally extending portion of the dirty water outlet pipe (13), **characterized, in that** the housing (1) has an upper part (2) in the form of a cylinder that is closed on the lower side by a bottom (5), wherein the bottom (5) has a passage (6) to which the dirty water outlet pipe (13) is connected, and that the housing has a lower part (3) which contains the siphon chamber (15) and has the form of a pot which is connected with its open side to the bottom (5), and that the dirty water outlet pipe (13) runs in a bend through the siphon chamber, this bend leading to a portion of the lateral wall of the lower part (3) and extending through this portion.

2. The water filter according to claim 1, **characterized in that** the partition wall (18) is arranged on a portion of the lateral wall that is situated opposite the overflow edge.

3. The water filter according to claim 1 or 2, **characterized in that** the lower part (3) and the dirty water outlet pipe (13) form an integral unit which is detachably connected to the upper part (2).

4. The water filter according to claim 3, **characterized in that** the detachable connection is a latching connection.

5. The water filter according to claim 1 or 2, **characterized in that** the partition wall (18) has a vertically running portion (19) which spans over the outer opening (14) and has a horizontally running portion (20) which closes the region between the vertically running portion (19) and the lateral wall of the lower part (3) towards the top.

6. The water filter according to claim 5, **characterized in that** the vertically running portion (19) and the horizontally running portion (20) form an integral unit which is inserted into the lower part (3) and is welded or glued thereto.

## Revendications

1. Filtre à eau, notamment filtre à eau de pluie, pour une citerne, avec un boîtier (1), dans lequel est disposé un tamis (9) qui divise le boîtier (1) en une chambre d'eau polluée et une chambre d'eau pure, la chambre d'eau polluée disposant d'une arrivée pour l'eau à filtrer et un écoulement d'eau polluée pour l'eau non filtrée et la chambre d'eau pure d'un écoulement d'eau pure (12) pour l'eau filtrée, avec un trop-plein de citerne qui débouche par le biais d'un siphon (17) dans l'écoulement d'eau polluée, dans la partie inférieure du boîtier (1) du filtre à eau, une chambre de siphon (15) étant constituée qui est en liaison par un bord de trop-plein (16) avec l'écoulement d'eau polluée et comporte une ouverture extérieure (14) et **en ce que** pour former le siphon (17) une zone entre le bord de trop-plein (16) et l'ouverture extérieure (14) est séparée dans la chambre de siphon (15) au moyen d'une paroi de séparation (18), le bord inférieur de la paroi de séparation (18) se situant en dessous de l'ouverture extérieure (14) et au-dessus du bord de trop-plein (16) et un tuyau d'écoulement d'eau polluée (13) qui forme l'écoulement d'eau polluée, passant par la chambre de siphon (15) et comportant à l'intérieur de la chambre de siphon (15) une ouverture formant le bord de trop-plein (16) qui se situe sur le côté supérieur d'une section du tuyau d'écoulement d'eau polluée (13), passant à l'horizontale, **caractérisé en ce que** le boîtier (1) possède une partie supérieure (2) sous la forme d'un cylindre fermé par un fond (5) sur la face inférieure, le fond (5) comportant un passage (6), auquel se raccorde le tuyau d'écoulement d'eau polluée (13) et **en ce que** le boîtier comporte une partie inférieure (3) ayant la forme d'un pot contenant la chambre de siphon (15), qui se raccorde au fond (5) avec son côté ouvert et **en ce que** le tuyau d'écoulement d'eau polluée (13) passe dans une courbure par la chambre de siphon, qui conduit à une section de la paroi latérale de la partie inférieure (3) et pénètre celle-ci.

2. Filtre à eau selon la revendication 1, **caractérisé en ce que** la paroi de séparation (18) est disposée sur une section de la paroi latérale opposée au bord de trop-plein.

3. Filtre à eau selon la revendication 1 ou 2, **caractérisé en ce que** la partie inférieure (3) et le tuyau d'écoulement d'eau polluée (13) forment une unité intégrale qui est reliée de manière amovible à la partie supérieure (2).

4. Filtre à eau selon la revendication 3, **caractérisé en ce que** la liaison amovible est une liaison à crans.

5. Filtre à eau selon la revendication 1 ou 2, **caractérisé en ce que** la paroi de séparation (18) comporte une section (19) passant verticalement, qui surplombe l'ouverture extérieure (14) et une section (20) passant horizontalement qui ferme vers le haut la zone entre la section (19) passant verticalement et la paroi latérale de la partie inférieure (3).

6. Filtre à eau selon la revendication 5, **caractérisé en ce que** la section (19) passant verticalement et la section (20) passant horizontalement forment une unité intégrale qui est insérée dans la partie inférieure (3) et est soudée ou collée à celle-ci.
